# EUROPEAN PATENT SPECIFICATION

(11) **EP 2 106 703 B1**
(45) Date of publication and mention of the grant of the patent: **16.05.2012**
(21) Application number: 08290305.5
(22) Date of filing: 31.03.2008
(51) Int. Cl.: A23L 1/164, A21D 13/08

(54) **Process for producing ultra-thin biscuits with a smooth surface**
Verfahren zur Herstellung von ultradünnen Keksen mit glatter Oberfläche
Procédé pour la production de biscuits ultra minces dotés d'une surface lisse

(43) Date of publication of application: 07.10.2009
(73) Proprietor: Generale Biscuit, 94150 Rungis (FR)
(72) Inventor: Besse, Nicolas, 02400 Gland (FR); Gauduchon, Luc, 17000 La Rochelle (FR); Machado, Luis, 91750 Champcueil (FR); Tronsmo, Kari, 94110 Arcueil (FR)
(74) Representative: Jacquard, Philippe Jean-Luc

(56) References cited:
- EP-A- 1 203 536
- US-A- 3 502 479
- US-A- 5 690 982
- US-B1- 6 479 090

## Description

This invention relates generally to a process for making thin and smooth biscuits, optionally curved biscuits and biscuits obtainable by said process.

In the field of biscuits and cereal snacks, two main categories can be considered, namely savoury and sweet products. The savoury category includes crackers, extruded products, fried chips and bread substitutes. Among these, candidates for ultra-thin products are crackers and chips.

Sweet biscuits include plain biscuits, filled biscuits (sandwich), biscuits with a chocolate cover, and cakes.

Cracker dough is low in fat and sugars, rich in flour, and the wheat flour develops a gluten network when given mechanical energy and contact with water. The storage proteins of wheat, glutenins and gliadins, interact to form a viscoelastic network, giving the dough its elasticity and extensibility. However, this network needs to be slightly weakened in order to decrease the elasticity and maintain a good extensibility, so as to limit distortion of the dough pieces after cutting, while maintaining a good tolerance to sheeting between gauge rolls. The weakening of the gluten network can be done in three ways, defining three main families of crackers: by yeast fermentation, by enzyme (protease) treatment, or by addition of sulfites. In the first two cases, a resting time of several hours is needed in a controlled temperature room for the yeast to develop or the enzymes to act. Sulfites need less resting time, generally below 45 minutes, but cause question regarding health effect, and as such the quantities are limited by regulatory bodies.

The resting time is not convenient for industrial production, requiring space and energy for the dough fermentation/resting, and causing high losses of prepared dough in the case of unexpected stops in production, because the dough rheology depends on a gluten network.

Formulations using pre-gelatinised starches are known for the production of chips (for example from Patent US 3 998 975), but generally associated with frying of the dough pieces. Frying gives high contents of fat in the final products, and the solution to obtain low-fat products have been de-fatting of the fried products. Some examples have been reported of oven-baked chips, but with forming and baking technologies that are not compatible with asymmetric shapes, as for example in Patent Application EP 1 656 834 A2.

Pre-gelatinised starches have been used in oven-baked crackers, but in general to obtain a blistered product, giving uneven shapes with air bubbles, so that the products are not smooth and not very thin either.

To obtain a well defined three-dimensional shape, such as a curved product, the dough piece needs to be formed during heat treatment, to obtain its shape before reaching the glass transition temperature of the starches.

Curved shapes are known for chips. Classic potato chips obtained from slicing potatoes and frying are disregarded, as these do not give regular and defined shapes. In the following, we will understand by the word "chips" a snack product obtained from dough containing potato in the form of flakes or starch, that is formed into dough pieces and then cooked either by frying or by baking.

The most common way of forming the dough pieces into a defined shape, is by frying the dough piece while placed between a mould and a counter-mould.

The three-dimensionally shaped chips known are generally savoury products, not sweet products, and their surface state is generally rough.

Frying is incompatible with the application of a chocolate layer on the biscuit after baking, as all fats and oils compatible with frying cause fat blooming of chocolate. Also, frying gives products with fat contents typically ranging from 30 to 40 g/100g, whereas baked products may have low fat contents, typically from 15 to 25 g/100g.

Patent Application EP 1 656 834 A2 describes the production of snack chips using a thin chain link strip of dough blanks by baking the strips in an oven and breaking them apart into individual chips after baking. It is noticeable that the baking of a dough strip is not compatible with an asymmetric dough piece shape; furthermore, in the hypothesis of pre-cuts and post-baking breaking, the breaking may generate rough edges which are not desirable.

However, blisters are often formed on the surface of baked crackers. They are formed when the water in the dough evaporates during baking. Gaseous H₂0 molecules diffuse into the air bubbles that are incorporated into the dough during mixing, and make these small gas bubbles expand in size. If the dough has film-forming components such as a developed gluten network, gums or pre-gelatinised starches, the gas is sufficiently retained by the membranes of the gas bubbles for these bubbles to inflate before exploding, forming blisters on the surface of the baked product. For some products, blisters are wanted, giving an extra airiness to the product and a typical visual aspect. The blisters can be formed randomly and be quite large for a plain cut-out dough piece, or more regularly spaced on the product surface if docker pins are used. There is one report in literature (WO2004/008864_A1) about avoiding blisters via formulation, including solid fat particles in the dough that remain partly solid even at baking temperature, and form "chimneys" for the vapour to evacuate. However, the particles will give a granular texture and taste to the final product. Also, the described solution applies to a product of different texture and higher water content than the one treated in the present case. A solution is thus requested to avoid blisters, either via formulation or process, or at least to control the formation of blisters to an acceptable degree.

Sweet sheeted biscuits are not thin, their thickness being typically between 4 and 8 mm, and if they have a low rugosity, their surface is not smooth since it is also marked by the docker pins that are used to avoid blisters, and their surface is slightly curved between the docker pins, not flat.

No product is known combining the shape and fineness of a chip, with a sweet taste and a smooth surface, and the possibility of adding a chocolate layer.

To that effect, the present invention relates to a process for making a thin biscuit having a smooth surface, comprising:
- making a dough by mixing the ingredients at a temperature between 40 and 70°C to obtain a sheetable cohesive dough , said dough having the following composition in weight:
   0-56% of wheat flour
   4-62% of native starch
   1-26% of pre-gelatinised starch
   wherein for one unit of weight of native starch NS, pre-gelatinised starch PS, and wheat flour WF, *i.e*. with NS+PS+WF = 1:
   WF ≤ 0.8, PS ≤ 0.37 and 0.7 ≤ NS/PS ≤ 9
      and also comprising:
      5-18% of water, and preferably not higher than 16%
      2-12% of fat, and preferably not higher than 10%
      0-28% of sugar, with 0-8% of glucose syrup
      0-6% of whey powder
      0.1%-1.5% of emulsifier
      0%-0.5% of salt
      0-2% of other ingredients namely, flavour, colouring etc..., but devoid of a leavening agent;
- sheeting the dough to a thickness between 0.2 and 1 mm, typically between 0.4 and 0.8 mm and preferably between 0.5 and 0.6 mm;
- cutting the sheeted dough into dough pieces, preferably individual dough pieces;
- baking the dough pieces on a perforated support to obtain a thin biscuit that is devoid of blisters.

In particular, NS/PS ≤ 8, and/or NS ≤ 0.8, and more particularly NS ≤ 0.72.

To avoid plasters and/or a hard dough which is more difficult to process, NS/PS ≥ 0.9 and PS ≤ 0.32.

A more crispy product may be obtained with WF ≤ 0.6, and more particularly WF ≤ 0.42. Preferably, 1.7 ≤ NS/PS ≤ 7, NS ≤ 0.69, PS ≤ 0.27 and WF ≥ 0.18.

The pre-gelatinised starch may comprise at least 1% of physically modified starch, e.g. maize waxy starch.

The pre-gelatinised starch may be at least partly non modified starch from potato and/or wheat and/or maize and/or tapioca.

The dough pieces may be in the form of strips that are cut into individual dough pieces after baking, but it is preferable that the sheeted dough be cut into individual dough pieces, as such individual pieces won't have rough edges due to post-baking breaking, and may have more sophisticated and/or asymmetrical shapes.

The dough uses pre-gelatinised starch to obtain a starch network rather than a gluten network, giving the dough a consistency which allows it to be sheeted into a fine layer, and baked on an open belt or mould after having been cut into strips or individual pieces.

The native starch may be between 20 and 44%, the pre-gelatinised starch between 4 and 17%, the wheat flour between 10 and 27%, and the water between 6 and 11%.

The sugar may be between 12 and 24%.

In the process, the mixing may comprise:
- pre-mixing the liquid ingredients including the fat in a molten state to form an emulsion between 40 and 90°C, more particularly between 45 and 80°C, and preferably between 55 and 65°C,
- mixing the ingredients in a mixer for at least 1 min.

The perforated surface may comprise holes or slits.

The perforated surface may be a convex mould for receiving at least one dough piece.

Said convex moulds may be mounted on a conveyor moving along a first axis, the longitudinal axis of the convex moulds being perpendicular to the first axis.

The process preferably comprises in a further step a layer of spraying in at least one step a layer of chocolate on top of the biscuit.

The invention also relates to a biscuit having a smooth surface, liable of being manufactured by a process as mentioned above characterized in that is has:
- a density between 0.55 g/cm³ and 0.7 g/cm³ and more particularly between 0.6 g/cm³ and 0.65 g/cm³.
- a thickness between 0.9 mm and 2.5 mm, and more particularly between 1 mm and 1.4 mm
- a surface rugosity between 0.05 mm and 0.25 mm, and more particularly between 0.1 mm and 0.2 mm;
- a moisture content between 0.5% and 2%, and more particularly between 0.8% and 1.5%;

The Young elastic modulus E' (as defined below) may be between 10⁸ Pa and 4 10⁸ Pa, and more particularly between 1.5 10⁸ Pa and 3.5 10⁸ Pa.

The invention will be better understood from the following description, with the appended drawings in which:
- Figures 1a-1d show a flat dough piece (1a), a top view of a curved biscuit (1b) a view from left (1c) and a side view thereof (1d);
- Figure 2 is a ternary representation of the ratios of native potato starch NS, wheat flour WF and pre-gelatinised maize starch PS (with NS+WF+PS = 1) that give a processable dough and a pleasant product;
- Figure 3a-3d represent an overview of a production line from mixing (3a) to de-moulding and transfer (3d);
- Figures 4a-4c show a front view (4a), a side view (4b) and a top view (4c) of a curved perforated mould, Figures 4d1-4d6 showing various shapes of holes and slits;
- Figures 5a-5e are cross-cuts of products photographed through a binocular magnifying glass and the corresponding values of the rugosity for a sample of a biscuit according to the invention (5a), a typical fried potato chip "Pringles Light" brand type (5b), a typical wafer sheet from an ice cone (5c), a typical sheeted biscuit "Lu Petit Beurre" brand type (5d), and a typical cracker "Tuc" brand type (5e);
- Figure 6 illustrates the measurement of biscuit breaking force by three-point flexion for five types of products;
- Figures 7a-7b illustrate the measurement of Young elastic modulus by Dynamic Mechanical Thermal Analysis (DMTA) at 25°C;
- Figure 8 is a diagram comparing the texture profile of several products as described by a panel of tasting experts on a scale from 0 to 60 for a biscuit according to the invention (noted XXX), a chip ("Pringles" brand type), a cracker ("Tuc"brand type) and a sheeted biscuit ("Lu Petit Beurre").

In typical cracker dough for thin sheeting, the elasticity is given to the dough by the gluten network formed when wheat flour is hydrated and mixed into a dough. In order to obtain the right balance between elasticity and extensibility, the gluten network of a cracker dough is weakened either by fermentation by yeasts and/or lactic acid bacteria, or the protein bonds are cut by the use of added enzymes (proteases) followed by incubation at a specific temperature and duration. These procedures are time and energy-consuming and less flexible with respect to unforeseen breaks in industrial production.

In order to avoid these inconveniences, the dough for the product according to the invention is based on a dough consistency given by the use of pre-gelatinised starch(es) giving a starch network rather than a gluten network. The pre-gelatinised starch gives a good dough consistency allowing the dough to be sheeted into a fine layer for example between 0.2 and 1 mm, cut out to flat thin dough pieces, namely strips or individual pieces of the wanted shape, and transferred to an oven belt or mould for baking.

To obtain a dough texture compatible with sheeting into a very thin layer, the dough is preferably a mixture of flour, native and pre-gelatinised starches, fat and lecithin (or another emulsifier) and/or sugar. Flour may be dispensed with, but a dough devoid of flour is more expensive and may be hard or granular, although still acceptable for processing.

The addition of sugar e.g. of sugar syrup leads to a softer dough. An increase in sugar syrup level must be compensated by decrease of water levels. Other ingredients can be added, such as malt dextrin, maltose, milk derivatives such as whey powder, skimmed milk powder and/or whole milk powder, egg products such as liquid or dried egg yolk and/or white or whole egg, flavours, salt, and colouring agent, but no leavening agent.

For the pre-gelatinised starch, several sources can be used, for example starch from potato, wheat, maize or tapioca. The best result is obtained with physically-modified pre-gelatinised waxy maize starch. Non-modified pre-gelatinised maize starches give shorter dough and more fragile products. Tapioca starch gives small elastic dough pieces with less cohesiveness and a final product with a less crunchy texture. Pre-gelatinised potato starch gives a more granular structure and a powdery, dry sensation while eating the baked biscuit. Nevertheless, all those sources are acceptable, as the dough can be processed and the product obtained is thin, smooth, pleasant in taste and acceptable in texture.

The baked product should be thin and with a smooth, even surface, in order to obtain a final chocolate-covered product with a smooth chocolate surface. As the chocolate layer is very thin, typically 0.3 to 0.6 mm, the biscuit surface must be very smooth to avoid irregularities that would be visible through the chocolate layer.

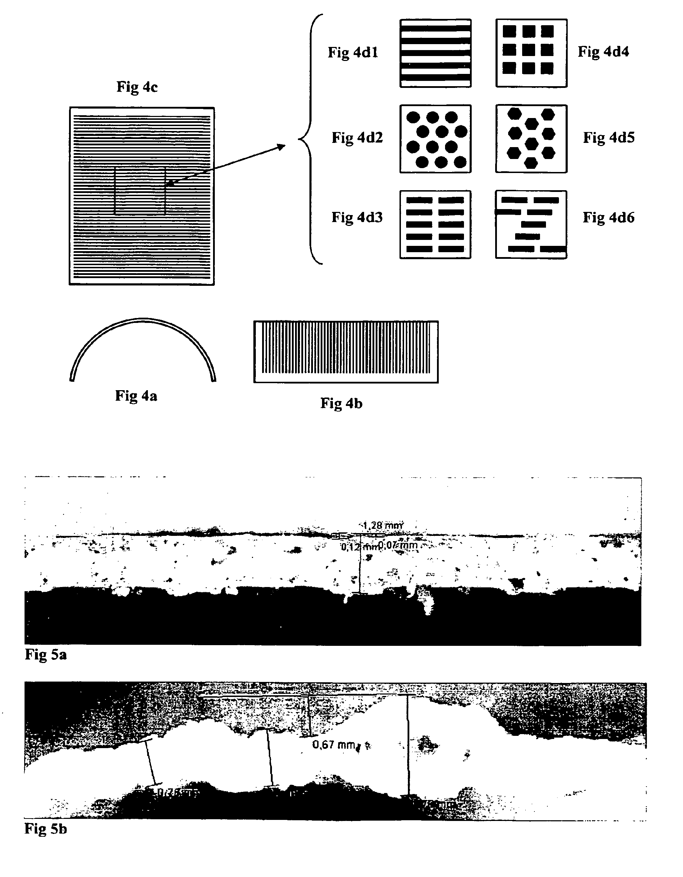

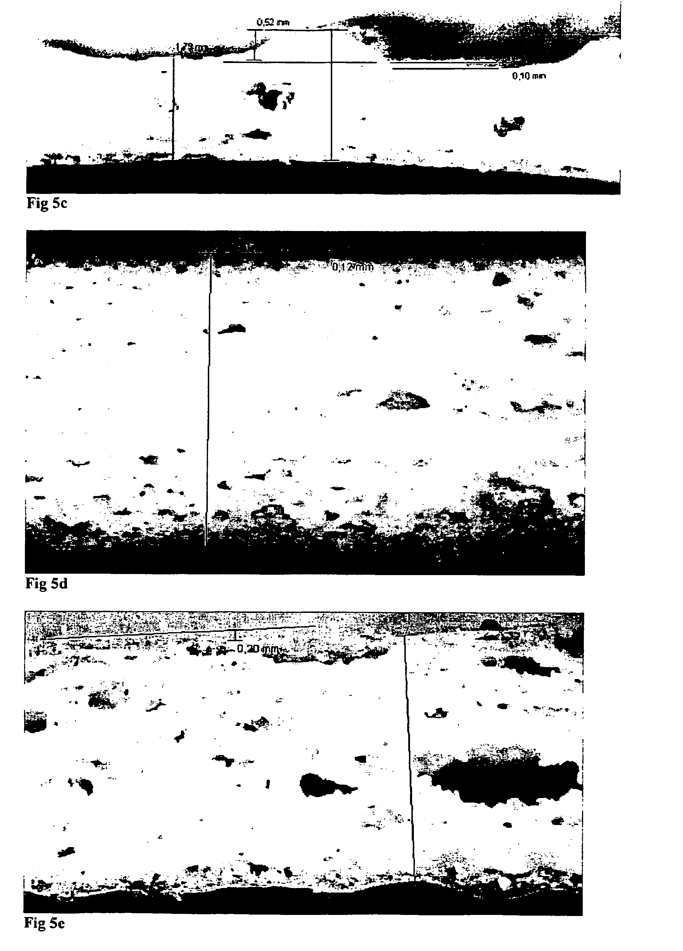

The present invention results in products as thin as fried chip products (0.8-1.9 mm), but with a significantly smoother surface, with a rugosity not significantly different from the unmarked parts of the surface of a classical sheeted biscuit manufactured with raising agents ("Lu Petit Beurre" type). These parts that are not marked by the docker pins generally used to evacuate the water and the gas produced by raising agents, are smoothened like the surface of a blown balloon because of the raising of the dough during cooking. Surface rugosity for a product according to the invention is between 0.05 and 0.25 mm and typically 0.1-0.2 mm, versus 0.4-0.7 mm for a typical fried chip product and 0.05-0.2 mm as well for the unmarked parts of a classical sheeted biscuit with raising agents (see Figure 5).

To obtain a smooth surface, minimal deformation should arise during baking. Therefore, no leavening agents or yeasts are used in the formula. The dough is sheeted to a thickness of 0.2-1 mm, giving a baked biscuit of 0.9-2.5 mm.

In addition, dough moisture contents is a parameter, as too high dough moisture levels leads to the formation of a film of starch resulting in blistering of the products during baking.

Certain ingredients, such as solid fat particles or certain pre-gelatinised starches in a granular form which are incompletely hydrated during dough mixing, can help avoid blister formation. The granular structure gives porosity to the dough sheet creating "chimneys" helping air and water evacuate during baking. However, these ingredients give an unpleasant texture to the final products, in particular a sandy and dry taste for certain starches such as potato starch in granular form.

To limit blister formation the products are baked on a perforated belt or mould, enabling air and water vapour to evacuate from both the top and bottom of the biscuit.

The ratio of native to pre-gelatinised starch is important, as a too low level of pre-gelatinised starches gives dough with too little cohesiveness, extensibility and elasticity, making it impossible to sheet to a reasonably thin layer. Too high levels of pre-gelatinised starches give a too stiff dough that is elastic but not cohesive, breaking into pieces before sheeting.

The sugar content is a lever to balance the texture, and also the product handling after baking, as higher sugar content gives products that remain plastic for a longer time during cooling. Adjusting sugar content is a lever to give a good balance between sweet taste, dough consistency and post-baking plasticity.

Biscuits are expected to have a golden brown colour. But as a significant amount of flour is replaced by starch in this product, few proteins are available for Maillard browning reactions. To boost those reactions, the quantity of reducing sugars, e.g. glucose, lactose or maltose, can be increased; a simple way to increase this quantity is to replace part of the icing sugar and water by some glucose syrup. The incorporation of some sweet whey powder, which brings both reducing sugar and proteins, also advantageously increases the coloration during baking. The addition of reducing sugar and whey powder, as well as the adjustment of baking time and temperature profile, give a more brownish coloration. Optionally, a colouring agent such as beta-carotene or cocoa powder can be added to the dough. A pleasant colour was obtained whilst using beta-carotene at a dosage between 0.001 and 0.01%, giving Minolta L-a-b values of respectively 68 - 74, -0.5 - +1.5 and 46 - 50.

The high levels of starch and relatively low levels of sugar and fat compared to a traditional butter biscuit, give a relatively neutral taste for the base formula. The taste can be enhanced using flavours, comprising notes of vanilla, butter, malt, nuts, Maillard reaction products and similar warm and round flavour notes.

A typical formula optimised with respect to dough handling, baking, product texture, colour and taste is presented below:

**Table 1**

| | **Parts by weight** | **Parts by weight** | | **Parts by weight** | |
|---|---|---|---|---|---|
| **Ingredient** | **Example** | **Typical range** | | **Feasible range** | |
| | | Low | High | Low | High |
| Mixture of native starch, wheat flour and pre-gelatinised starch (i) | 58 | 54 | 64 | 47 | 70 |
| *(Incl. native starch (ii))* | *(30)* | *(20)* | *(44)* | *(i)* | *(i)* |
| *(Incl. wheat flour)* | *(20)* | *(10)* | (27) | *(i)* | *(i)* |
| *(Incl. pre-gelatinised starch (iii) )* | *(8)* | *(4)* | *(17)* | *(i)* | *(i)* |
| Sugar (iv) | 20 | 12 | 24 | 0 | 28 |
| *(Incl. icing sugar)* | *(15)* | *(12)* | *(18)* | *(0)* | *(25)* |
| *(Incl. glucose)* | *(5)* | *(0)* | *(6)* | *(0)* | *(8)* |
| Sweet whey powder | 3 | 2 | 4 | 0 | 6 |
| Soy lecithin | 1 | 0.5 | 1.2 | 0.2 | 1.5 |
| Salt | 0.1 | 0.05 | 0.15 | 0 | 0.5 |
| Fat (v) | 7 | 5 | 8 | 2 | 12 |
| Water (vi) | 10 | 6 | 11 | 5 | 18 |
| Other (flavour, colouring...) | 0.3 | 0 | 0.8 | 0 | 2 |
| **Total before baking** | 100 | | | | |

| | | | | | |
|---|---|---|---|---|---|
| (i) see detailed breakdown on Figure 2. (ii) preferably native potato starch; however native wheat starch may be used with acceptable results as well. (iii) preferably physically modified or non-modified pre-gelatinised waxy maize starch, optionally pre-gelatinised potato starch or tapioca starch. (iv) includes glucose content of glucose syrup. (v) many fats can be used, such as butter, concentrated butter, shortening, palm oil, palm kernel oil, coconut oil *etc.* The choice of the fat will result from the identification of the best compromise between organoleptic features, nutritional features, cost features, industrial convenience and compatibility with chocolate. Concentrated butter gives the best results in term of organoleptic likeness. A mixture of 50-100% concentrated butter, 0.5-45% palm oil, 0-2.5% palm kernel oil and 0-2.5% coconut oil is a good compromise, especially as it is cheaper than pure concentrated butter. (vi) includes added water and water content of glucose syrup. | | | | | |

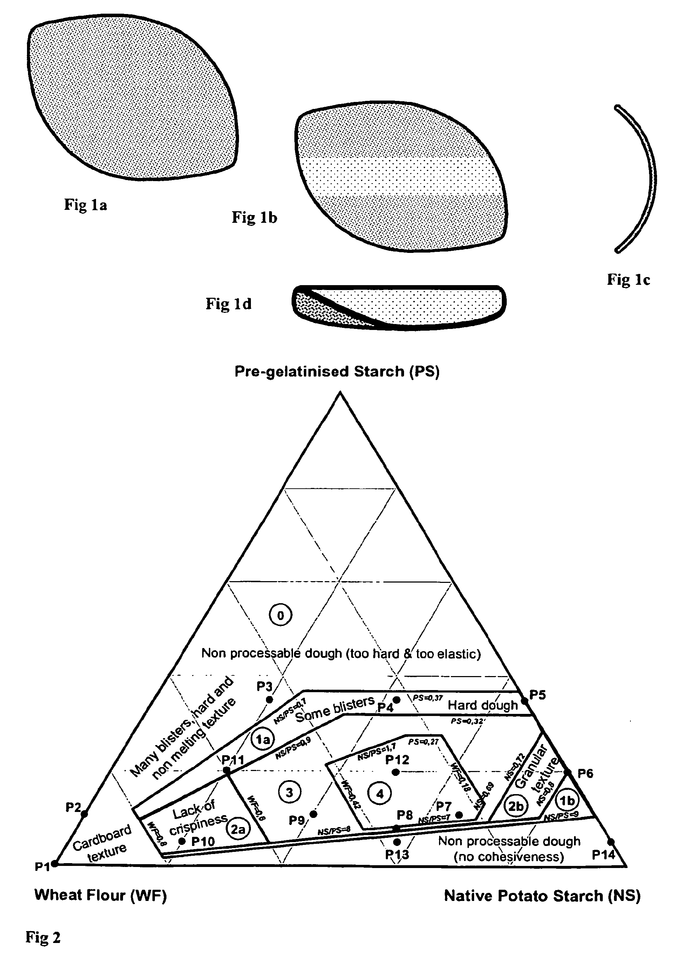

Several trials have been performed to assess more thoroughly the role of wheat flour (WF), native potato starch (NS) and pre-gelatinised starch (PS) which are the essential elements as regards the processability of the dough" for a given total amount of those three ingredients. The main results of those trials is shown in the table below and schematised in Figure 2. Ternary coordinates correspond to the parts by weight of each of the three ingredients, with NS+PS+WF=1. The other ingredients may be according to the example given in the Table 1.

**Table 2**

| **Point** | **Ternary coordinates** | | | **Dough quality** | **Finished product aspect & texture** |
|---|---|---|---|---|---|
| | **NS** | **WF** | **PS** | | |
| **P1** | 0 | 1 | 0 | Sticky & slightly too hard | Not crispy, floury, not melting, unpleasant |
| **P2** | 0 | 0.89 | 0.11 | Very hard, but good cohesiveness | Very hard, not melting, unpleasant |
| **P3** | 0.2 | 0.45 | 0.35 | Too hard & too elastic | Not smooth, blisters, very hard, not melting, rather unpleasant |
| **P4** | 0.425 | 0.225 | 0.35 | Too hard & too elastic | Blisters, very crispy |
| **P5** | 0.65 | 0 | 0.35 | Too hard & too elastic | Blisters, pleasant |
| **P6** | 0.8 | 0 | 0.2 | Poor cohesiveness | Pleasant (crispy & melting) |
| **P7** | 0.665 | 0.225 | 0.11 | OK | Very pleasant |
| **P8** | 0.558 | 0.362 | 0.08 | Slightly too dry | Rather crispy |
| **P9** | 0.44 | 0.45 | 0.11 | Slightly too hard & too dry | Rather hard, a few blisters, overall acceptable |
| **P10** | 0.2 | 0.75 | 0.05 | OK | Not very crispy |
| **P11** | 0.2 | 0.6 | 0.2 | OK | Blisters |
| **P12** | 0.485 | 0.315 | 0.2 | Firm but OK | Very pleasant |
| **P13** | 0.57 | 0.38 | 0.05 | No cohesiveness, impossible to sheet | N/A |
| **P14** | 0.95 | 0 | 0.05 | No cohesiveness, impossible to sheet | N/A |

The conclusions of those trials confirm that native (e.g. potato) starch is necessary to avoid blisters, whereas pre-gelatinised starch is necessary to give an acceptable cohesiveness to the dough. On the other hand, a too high ratio of flour gives a hard and cardboard texture, a too high ratio of native potato starch gives a too granular texture, and a too high ratio of pre-gelatinised starch gives a too hard and too elastic dough forming blisters. Regarding the formation of blisters and the cohesiveness of the dough, the ratio R = NS/PS of native starch on pre-gelatinised starch plays an important role, as they both play in an opposite direction. A high ratio will be deleterious for the cohesiveness of the dough, whereas a low ratio will foster the formation of blisters.

The following zoning of the ternary diagram can be made, giving five main areas:

**Area 0:** non-workable area. The recipe cannot be processed, or the product obtained is totally rejected in term of appearance (blisters) or texture (cardboard). This area is defined by the following conditions:
- PS > 0.37
- or WF > 0.8
- or NS/PS < 0.7
- or NS/PS > 9.

Points P1, P2, P3, P13 and P14 of the ternary diagram are part of area 0.

**Area 1:** workable area. The recipe can be processed with some difficulty and the product is rather poor in appearance and texture; however the product obtained can present some interesting side characteristics, such as low cost, specific nutritional profile as gluten-free profile, deliberate blisters or granularity. This area is defined by the following conditions:
- WF ≤ 0.8
- and PS ≤ 0.37
- and 0.7 ≤ NS/PS ≤ 9
- and
[ either [ PS > 0.32 or NS/PS < 0.9 ] (area 1a)
or [ NS > 0.8 or NS/PS > 8 ] (area 1b) ].

Depending which of both last conditions are fulfilled, area 1 is divided into 1a (high PS and low NS/PS) and 1b (high NS and high NS/PS). Area 1a corresponds to a still acceptable probability of blisters and a risk of too hard, elastic and film-forming dough, whereas area 1b corresponds to a granular texture and an acceptable risk of non-cohesive dough.

Points P4, P5 and P11 of the ternary diagram are part of area 1.

**Area 2:** rather acceptable area. The recipe can be processed without major issue, and the product obtained is rather acceptable regarding most of sought parameters (dimensions, appearance), though the texture is still not optimal. The product obtained can present some interesting side characteristics, such as low cost, specific nutritional profile as gluten-free profile, or deliberate granularity. This area is defined by the following conditions:
- WF ≤ 0.8
- and NS ≤ 0.8
- and 0.9 ≤ NS/PS ≤ 8
- and
[ either [ WF > 0.6 ] (area 2a)
or [ NS > 0.72 ] (area 2b) ].

Depending which of both last conditions are fulfilled, area 2 is divided into 2a (high WF) and 2b (high NS). Area 2a corresponds to insufficiently crispy texture, whereas area 2b corresponds to slightly too granular texture and not enough cohesive dough.

Points P6 and P10 of the ternary diagram are part of area 2.

**Area 3:** acceptable area. The recipe can be processed without major issue, and the product obtained is very acceptable regarding sought parameters (dimensions, appearance, texture). This area is defined by the following conditions:
- WF ≤ 0.6
- and NS ≤ 0.72
- and PS ≤ 0.32
- and 0.9 ≤ NS/PS ≤ 8
- and [ either WF > 0.42 or WF < 0.18 or PS > 0.27 or NS > 0.69 or NS/PS < 1.7 or NS/PS > 7 ].

Point P9 of the ternary diagram is part of area 3.

**Area 4:** optimal area. The recipe can be processed without any difficulty, and the product obtained reaches all sought parameters. This area is defined by the following conditions:
- PS ≤ 0.27
- and NS ≤ 0.69
- and 0.18 ≤ WF ≤ 0.42
- and 1.7 ≤ NS/PS ≤ 7.

Points P7, P8 and P12 are part of area 4.

Apart from the specific topic of flour and starches relative ratios, the three examples in the table below give dough that is difficult to process, though still acceptable, as one of the ingredients (fat, emulsifier and water) is in on a high or low end of the feasible range.

**Table 3**

| **Ingredient** | **Parts by weight** | **Parts by weight** | **Parts by weight** |
|---|---|---|---|
| Native potato starch | 30 | 30 | 30 |
| Wheat flour | 20 | 20 | 20 |
| Pre-gelatinised modified maize starch | 8 | 8 | 8 |
| Icing sugar | 15 | 15 | 15 |
| Glucose | 5 | 5 | 5 |
| Sweet whey powder | 3 | 3 | 3 |
| Soy lecithin | 1 | **0.2** | 1 |
| Salt | 0.1 | 0.1 | 0.1 |
| Fat | **10** | 7 | 7 |
| Water | 10 | 10 | **16** |
| Other | 0.3 | 0.3 | 0.3 |
| **Total before baking** | **103** | **99** | **106** |
| **Problem encountered** | Dough not enough elastic and too sticky | Hard dough, difficult to sheet | Too soft and moist dough |
| **Diagnosis** | Too much fat in this dough | Not enough emulsifier in this dough | Too much water, in this dough |
| **Conclusion** | Formulations difficult to process | | |

Residual moisture after baking ranges from 0.5 to 2%, typically from 0.8 to 1.2%. A low moisture is one of the keys to obtain a pleasant texture.

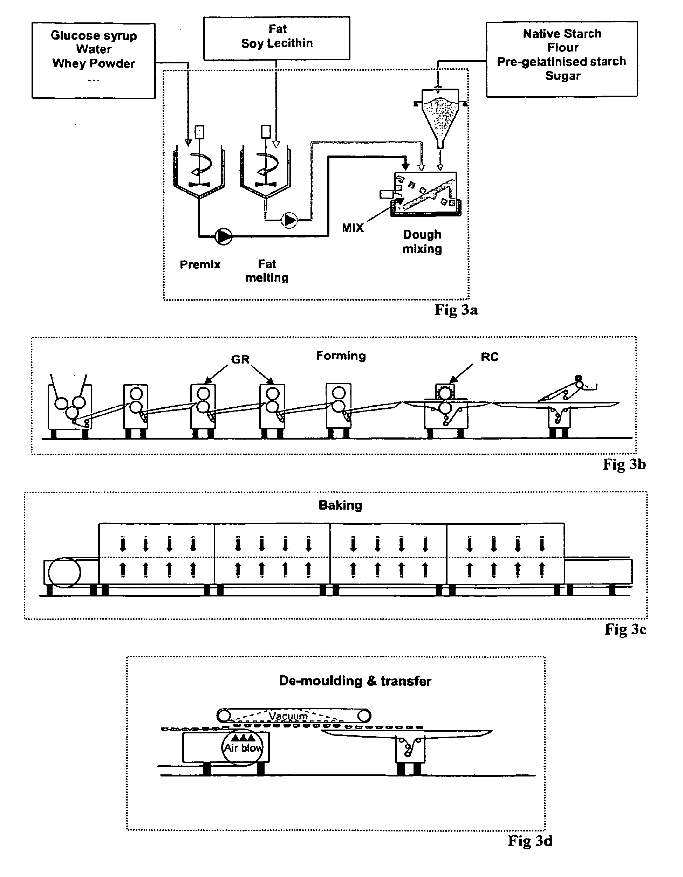

Mixing is done (Figure 3a) by first mixing the dry ingredients, particularly the flour, starches and sugar, and optionally the smaller dry ingredients. The liquid ingredients, in particular melted butter and/or shortening and water, and optionally the smaller dry ingredients, are premixed to form an emulsion before introduction to the mixer. The emulsion is kept between 40°C and 90°C, more particularly between 45°C and 80°C, and preferably between 55°C and 65°C. The mixer MIX - typically a double Z blade - is equipped with a heated double jacket, holding the temperature of the double jacket between 50°C and 70°C, typically 60°C.

The high temperature of the mixer double jacket and of the ingredients is important so as to get a cohesive dough, that develops some elasticity during the mixing, thanks to the formation of a sugar and pre-gelatinised starch network that compensates for the poorness of gluten network. More precisely, a good network is obtained only when the dough reaches a temperature of 40°C-45°C minimum during its mixing, and not higher than 70°C and more particularly no higher than 65°C. This temperature cycle can be short, as the dough remains cohesive and elastic enough even if it has cooled down to 20-25°C when it gets sheeted. The typical mixing time to obtain such a dough temperature is 3 to 6 min at a speed between 50 and 90 rpm.

When mixing at lower temperatures than 40°C, the dough does not develop enough elasticity and cohesiveness; as a result it behaves rather as an aggregate than a dough, and cannot be sheeted to any thickness compatible with a reasonably thin product.

Forming (Figure 3b) is done by a classical sheet and cut technology. Biscuits are sheeted by 2 to 5, typically 3 to 4 gauge rolls GR, to a final thickness between 0.2 mm and 1.0 mm, typically between 0.4 mm and 0.8 mm, and preferably between 0.5 mm and 0.6 mm. Dough pieces of the wanted shape are cut out from the dough sheet by a rotary cutter RC, and the scrap is recycled into the hopper of the sheeting line.

Specific shapes, including asymmetric shapes or shapes with holes in the dough piece, can be formed as they are compatible with the global process.

Optionally, the dough sheet can be cut into continuous ribbons and baked as such, before being cut crosswise after baking into individual shells. However, this option is not the preferred one, as the edges generated by post-baking cutting are not as precise as those obtained from pre-baking cut out.

The cut dough piece is flat, and the optional curvature needs to be given during heat treatment, in this case oven baking Figure 3c). Three options are possible, either to bake the product on a curved support, or to partially bake it on a flat oven belt, then transfer it to a forming device and then finish the baking, or to bake it on a flat oven belt, and shape it at oven outlet before glass transition takes place, typically before it cools down to less than 75°C, while the product is still plastic and the structure not fully set.

The first case has been privileged because it ensures a more stable formation of the product and simplifies the industrial equipment.

The heating technology can be direct gas flame, but it should be preferably indirect heating as forced convection. Indeed, direct gas flame will result in a high variability in colour, within products and onto each individual product, as the thinness of the dough piece or ribbon makes it very sensitive to direct exposure to radiative heat flux. On the contrary, the use of a classical forced convection baking tunnel allows a thorough control of colour and moisture. Best results are obtained with a convective heat flux close to 2 kW/m², a radiative heat flux close to 0.5 kW/m², a rather low temperature - between 160 and 180°C all along the oven - and an average baking time - between 4 and 6 min. The baking of the product can be seen as a simple drying out, as no strong energy boost is required to get any leavening, whereas the product remains thin all along baking reaction which makes water evacuation easier than with a classical raised biscuit or cracker. Indeed, classical biscuits or crackers require significantly higher temperatures - usually between 200 and 250°C.

Formulations giving a coarse texture - typically those with a high ratio of native starch on pre-gelatinised starch - can be baked on a continuous surface, but for formulations giving a smooth surface, blisters occur even at low and optimised water levels if baked on a continuous surface. Having resort to perforated oven belt or moulds enables water and trapped air to evacuate and result in a biscuit without blisters, within the scope defined in the chapter about formulation.

Preferred requirements for designing the perforations are as follows:
- Avoid any non-perforated area with external dimensions (length by width) of more than 1.5 mm by 1.5 mm, or more than 2.5 mm by 1.2 mm, or more than 5 mm by 1 mm; if this condition is not respected, a blister may appear on the upper surface of the product as water and gas cannot be evacuated from the other side.
- Avoid any perforation with external dimensions (length by width) of less than 0.8 mm by 0.8 mm; such a small perforation would not let enough area for water and gas to evacuate, whereas it would get filled by biscuit crumbs after a certain number of baking cycles.
- Avoid any perforation with external dimensions (length by width) of more than 2 mm by 2 mm, or more than 2.5 mm by 1.5 mm; if this condition is not respected, the dough piece will cave in, resulting in a non flat upper surface of the product. It is noticeable that this phenomenon can be also turned positively, in the case where there is a deliberate wish to have a grooved or marked surface on the profit of product appearance.
- Have a perforation ratio (defined as the ratio between hollow areas and total surface) higher than 20-25%, not only in average on each mould, but also locally on any area of more than 8 mm diameter; if this condition is not respected, some blisters may appear on the upper surface of the product, as the evacuation surface is not wide enough.

Figure 4 shows a scheme of an individual mould with various examples of perforation patterns (d1 to d6), as holes or slits.

The moulds can be individual, or designed to hold several dough pieces length wise or cross wise. They can be fixed by clips or by welding on transversal bars, the latter being driven forth and back all along the oven by one or several chains as in a classical technique used in bakery for tunnel ovens or fermentation chambers.

As the product contains in most of the cases a significant amount of sugar and has a very high ratio between the surface in contact with the mould and the weight of the biscuit - typically between 10 and 15 cm²/g - the product sticks to the baking moulds. It cannot be de-moulded right at the exit of the oven, as sugar is still very sticky above 90°C, but on the other side it is not ideal to wait for a natural cooling down to 30-40°C, as a long non-heated conveyor length at the end of the oven would severely deteriorate the heat balance and the metal immobilisation of the oven.

A solution has been developed to remove baked biscuits from their moulds after a quite short passage - no more than 45 sec - outside of the baking tunnel, at a temperature between 50°C and 70°C, a few seconds after the glass transition has taken place and the products start behaving as solid and elastic sheets and no more as soft and viscous sheets. This solution consists in coupling air blowing from underneath and depression conveyor from above, so as to simultaneously cool, blow and suck the products. It is illustrated in Figure 3d.

The pressure and orientation of air blow, and the distance between nozzles and products, are not very sensitive parameters and depend much on the geometry of the fix and mobile pieces below the moulds.

The depression conveyor runs in the same direction and at approximately the same speed as the baking conveyor, and the gap in-between the running moulds and the running conveyor may be as small as 3 mm to 10 mm, along a "takeoff" length longer than the distance occupied by three consecutive rows of products, a "flight" length longer than the distance occupied by two consecutive rows of products, and a "landing" length - located above the next cooling conveyor and corresponding to the drop of depression - longer than the distance occupied by one row of products.

The conveyor itself may be porous to air, and can be made for instance of a perforated polyurethane band of 1 to 2 mm thickness, typically 1.2-1.5 mm, with holes diameter between 0.5 and 6 mm, typically 4 mm, spaced out by 3 to 20 mm, with a total perforation ratio (defined as the ratio of surface of holes on total surface) between 3 and 20%, typically 4-10%. The band may have enough softness to follow closely the possible curvature of the products on a minimum width of 10 mm. The delta of pressure between both sides of the band may be between 0.05 and 0.5 bar, typically between 0.1 and 0.2 bar. To avoid aspirating uselessly too much air, the surface of aspiration above the conveyor can be limited to apertures in the shape of narrow rectangles located above each file of products, with a width of 5 to 30 mm, and a length superior to the distance occupied by five consecutive rows of products, typically superior to 350 mm.

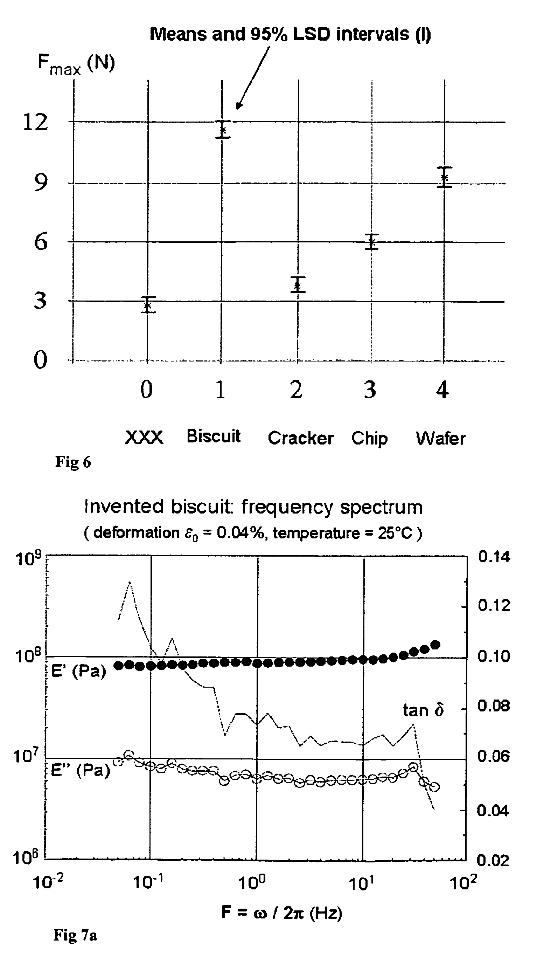

To characterise thoroughly the invented product, and possibly compare it to existing products obtained by classical technologies, the following parameters have been defined:
- Moisture (%): quantity of residual water in the product, in percent of product weight.
- Gelatinised starch (%): GS is the quantity of gelatinised starch present in the product, calculated or measured indirectly as the product of polymerisation factor (0.9 = ratio of molecular weight from glucose C₆H₁₂O₆ to starch (C₆H₁₀O₅)n) by the difference RRG-G-GM between rapidly released glucose RRG and both monomer glucose G present in the product and glucose equivalent GM from the maltose present in the product (using a conversion factor 1.116 between half a maltose C₁₂H₂₂O₁₁ and one glucose C₆H₁₂O₆). Glucose G and maltose M are measured by classical enzymatic method using a Bohringer Mannheim / R-Biopharm kit. Rapidly released glucose RRG is also measured by enzymatic method, where the part of starch which is accessible for enzymes is hydrolysed by a purified fungous alpha amylase into maltose and dextrins. The hydrolysis is stopped after 30 min by the addition of diluted sulphuric acid. After centrifugation, the remnants are treated in excess of purified amyloglucosidase to obtain a total degradation of starch dextrins into glucose, the latter being then dosed by classical enzymatic method using a Bohringer Mannheim / R-Biopharm kit. Actually RRG is the sum of G (monomer glucose already present as such in the product), of GM (glucose equivalent in the form of maltose) and of the glucose coming from gelatinised starch (which breaks down into glucose during the RRG analysis). Thus, RRG - G - GM represents the quantity of glucose coming from the gelatinised starch, and 0.9*(RRG - G -GM) is the quantity of gelatinised starch GS.
- Thickness (mm): shorter distance between top and bottom surface of the shell, estimated thanks to a binocular magnifying glass (see Figure 5).
- Surface rugosity (mm): vertical gap between "valleys bottoms" and "mountain tops" on the upper surface of the product, estimated thanks to a binocular magnifying glass (see Figures 5a to 5e). In figure 5a (invention), the rugosity ranges from 0.07 mm to 0.12 mm, in Figure 5b ("Pringles Light" brand type), it is up to 0.67 mm, in Figure 5c (wafer sheet for an ice cone), it is over 0.1 mm (the 0.5 mm high ribs which reinforce the structure have been disregarded),in Figure 5d ("Lu Petit Beurre" brand type ), it is over 0.12 mm; and in Figure 5e ("Tuc" brand type), it is over 0.20 mm).
- Density (g/cm³): ratio of weight on external volume, the volume of inner alveoli being included in the external volume; the external volume is estimated by simple calculations based on surface and thickness.
- Breaking force (N): the breaking force Fₘₐₓ represent the "fragility" of the product and is defined as the force necessary to break the product in a three-point flexion with a TAXT2, where a cylindrical metal probe, having a flat circular 8 mm-diameter front surface, runs vertically at a constant speed of 0.5 mm/s down to the middle of the sample placed underneath while the force applied is recorded. Fₘₐₓ is the peak of the force applied when breaking the product. The measure is repeated on a minimum of fifteen samples of each product. For curved products, the samples are placed on a flat surface with their convex face up. For flat products, the samples are placed on two symmetrical supports distant from 55 mm. Figure 6 shows the results of the measurements of Fₘₐₓ in N by three-point flexion with a TAXT2 for a product according to the invention (noted "XXX"), a "Lu Petit Beurre" brand type sheeted biscuit (noted "Biscuit"), a "Pringles Light" brand type fried moulded potato chip (noted "Chip") and a wafer sheet for an ice cone (noted "Wafer").
- Young elastic modulus E' (Pa), expressing the intrinsic stiffness of the product, and defined as the elastic component E' of the complex Young modulus E* = (E'² + E"²)^{1/2}, where E' is the elastic component (or storage modulus) of E*, and E" the viscous component (or loss modulus) of E*.

The measurement of E' and E" is done by DMTA (Dynamic Mechanical Thermal Analysis), with a MKIIIE analyser from TA-Instrument. The method consists in imparting by means of a movable clamp an harmonic stress σ (expressed in Pa or N/m²) at a pulsation ω (in rad/s or in s⁻¹) through a one-point flexion applied on a rectangular sample of the product, and recording in parallel the resulting strain ε (dimensionless parameter expressing the relative distortion). There is no pre-constraint applied by the movable clamp before starting oscillations. Thanks to a regulation loop, the analyser adapts the maximum value of σ till the stain ε oscillates within the linear distortion domain of the product.

For an ideal elastic solid ("solid of Hooke", defined by its pure storage modulus E'), the stress is proportional to the strain in the linear viscoelastic regime and we have ε =σ / E'. For an ideal viscous liquid ("liquid of Newton", defined by its pure loss modulus E"), the stress is proportional to the strain rate and we have dε/dt = σ / E". For a complex viscoelastic material such as a biscuit, combining a solid and a viscous behaviour in a proportion depending on temperature and frequency, there is a phase lag δ between the applied harmonic stress σ = σ₀ sin (ωt+δ) and the resulting harmonic strain ε = ε₀ sin ωt, and we have the relation tan δ = E" / E'.

σ₀ and ω being set, and ε being recorded in the time, E', tan δ and E" are calculated thanks to the relations above. In the analytical conditions used here, each sample is a rectangle cut out from the product, with a thickness T (in m) equal to the thickness of the product, a length L of 8 10⁻³ m free to move in-between the stationary clamp and the movable clamp, and a width between 10⁻² and 1.2 10⁻² m.

In the case of a one-point flexion as dealt with here, the maximum strain ε₀ is the dimensionless ratio ( T δl₀ ) / L² = ( δl₀ / L) / ( L / T), where δl₀ is the maximum value of the dynamic displacement δl (in m) given by the movable clamp, where ( δl₀ / L) is the relative distortion through flexion, and where ( L / T ) reflects the purely-dimensional propensity of the sample to bend (not linked to the intrinsic stiffness of the material). The stress σ (in Pa) is the ratio ( F/L² ) of the force F (in N) applied by the movable clamp on a square surface L² (in m²) having a side equal to the length L of the sample let free to move. In the case of an ideal elastic solid where ε=σ/E', we obtain ( T δl₀ ) / L²=ε₀=σ₀/E'=(F/L²)/E', hence F=E'Tδl₀ (in N).

On a quantitative point of view, with a sample having for instance a thickness T equal to 1.3 10⁻³ m as may have a product according to the invention, we would have in figures ε₀ ( T δl₀ ) / L² = 20.3125 x δl₀, and σ = F / L² = 15625 × F.

Different values of ε₀ have been chosen for each product, in order to work in the linear domain for each product, *i.e*. in the small, non-destructive distortion domain. All those values of ε₀ have been chosen among three possible values: 0.008%, 0.01% and 0.04%.

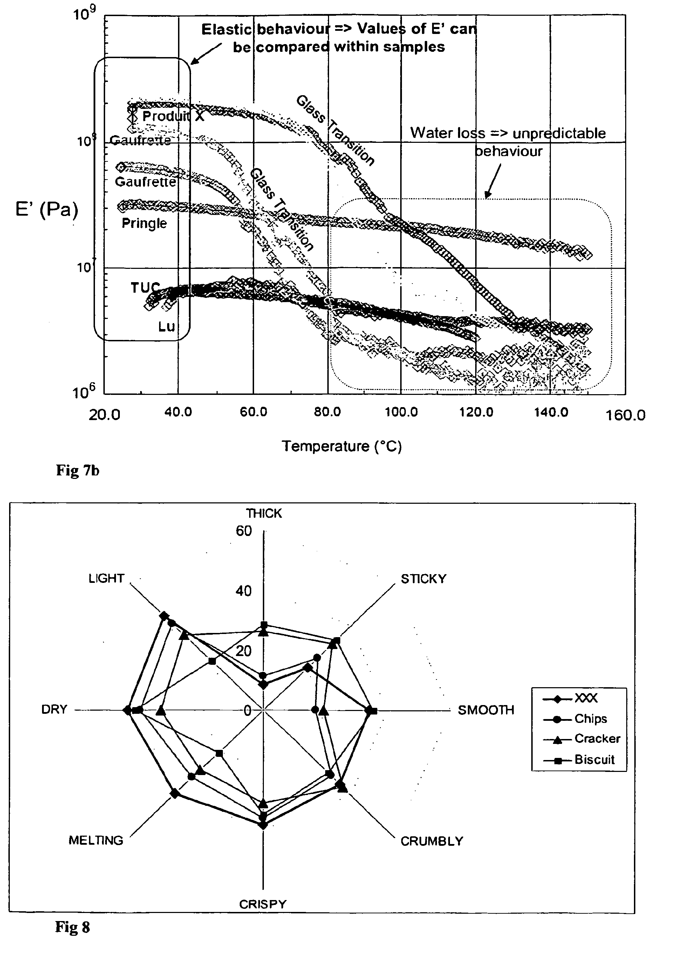

In the case of the product according to the invention E', tan δ and E" were measured at 25°C along a range of frequency F = ω / 2π between 0.01 Hz and 100 Hz (see Figure 7a); those measurements indicate that 1 Hz is a suitable frequency to assess E', as tan δ << 1 in the proximity of 1 Hz. For all the products analysed, E', tan δ and E" have been measured at 1 Hz along a range of temperature covering most of the "real life zone" 25-40°C, within which no significant evolution has been noticed (see Figure 7b). Figure 7b shows the results of measurements by DTMA (one-point flexion in harmonic mode at 1 Hz) of Young elastic modulus E' as a function of temperature for a product according to the invention (produit X), a wafer sheet from an ice cone noted Gaufrette (ε₀=0.008%), a "Pringles Light" brand type fried moulded potato chip noted "Pringles" (ε₀=0.01%), a "Tuc" brand type cracker noted "Tuc" (ε₀=0.01 %), an a "Lu Petit Beurre" sheeted biscuit noted "Lu" (ε₀=0.01%). Note that the differences in the value of ε₀ aims at working in the linear domain of each product i.e.; in the small non-destructive distortion domain. The obtained stability indicates that the analysed products are all below their glass transition temperature T_{G} at ambient temperature, and conversely that the measurement of E' is robust at ambient temperature.

The characteristics of the final baked biscuit, as defined above, are the following:
- Moisture: 0.5-2%, typically 0.8-1.5%;
- Gelatinised starch: 1-30%, typically 5-15%, preferably 6-10%;
- Thickness: 0.9-2.5 mm, typically 1-1.4 mm;
- Surface rugosity: 0.05-0.25 mm, typically 0.1-0.2 mm;
- Density: 0.55-0.7 g/cm³, typically 0.6-0.65 g/cm³;
- Breaking force: 2-4 N, typically 2.5-3.3 N;
- Young elastic modulus E': 10⁸-10⁹ Pa, typically 1.5 10⁸-6 10⁸ Pa.

The product may for example have a length between 30 and 100 mm, a projected width between 20 and 75 mm, with a surface between 5 and 70 cm², and preferably between 20 and 30 cm².

The product can be considered as a sweet biscuit because it has a similar composition and sweet taste. However, the dough forming technology used is similar to that used for producing crackers, and the shape of the product is close to that of a chip. On the other hand, despite it has a totally different forming technology from a wafer which is based on a liquid dough, the biscuit according to the invention can have a thinness and a three dimensional shape similar to those of a wafer. Thus, it can be seen as a hybrid of a chip, a cracker, a biscuit and a wafer. The table below compares its physical characteristics with related standard products.

**Table 4:**

| | **Biscuit according to the invention** | **Cracker ("Tuc" brand type)** | **Sheeted biscuit ("Lu Petit Beurre" brand type)** | **Chip ("Pringles Light" brand type)** | **Wafer sheet ("ice cone" type)** |
|---|---|---|---|---|---|
| | **Typical range *(example)*** | | | | |
| **Moisture (%)** | 0.8-1.5 | 0.8-3 | 0.8-4 | 0.8-4 | 2-6 |
| **Gelatinised starch (%)** | 5-15 *(8.5)* | *7.8* | *8.4* | *44.2* | *46.8* |
| **Thickness (mm)** | 1-1.4 | 3.5-7 | 4-8 | 0.8-1.9 | 1.3-3.5 |
| **Rugosity (mm)** | 0.1-0.2 | 0.15-0.3 | 0.05-0.2 | 0.4-0.7 | 0.02-0.15 |
| **Density (g/cm³)** | 0.6-0.65 *(0.62)* | *0.26* | *0.41* | *0.63* | *0.51* |
| **Breaking force (N)** | 2.5-3.3 | 3-5 | 8-15 | 4-8 | 7-12 |
| **Young elastic modulus (Pa)** | 1.5 10⁸-6 10⁸ | 3 10⁶-10⁷ | 3 0⁶-10⁷ | 10⁷-10⁸ | 5 10⁷-2 10⁸ |

This analytical summary shows that the product is close to a biscuit in term of starch quality, close to a chip in term of thinness, close to the non-perforated parts of a biscuit in term of smoothness, and unique in term of texture, combining a very high intrinsic stiffness (highest Young elastic modulus) and a very high fragility (lowest breaking force).

A more thorough illustration of this unique texture is given by a sensory analysis done in a controlled environment (AFNOR norm NF V09-105) by a panel of fourteen expert tasting people specialised in crackers (with two products per panellist), regularly trained following a common protocol (NF norm ISO 8586-2), who have assessed by a descriptive profile the texture of several products on a scale ranging from 0 to 60 (AFNOR norm NF V09-016) for a biscuit according to the invention, a chip ("Pringles" brand type), a cracker ("Tuc" brand type) and a sheeted biscuit ("Lu Petit Beurre" brand type). Each panellist has tasted two products of each type, coming from different packs. The results are shown on Figure 8 as a diagram, and are summarised in the tables below:

**Table 5a**

| **Means (scale from 0 to 60):** | | | | |
|---|---|---|---|---|
| | **Invented product** | **Chip** | **Cracker** | **Biscuit** |
| **THICK** | 8.61 | 11.40 | 26.23 | 28.37 |
| **STICKY** | 20.23 | 24.64 | 31.41 | 32.79 |
| **SMOOTH** | 34.11 | 16.71 | 19.16 | 35.27 |
| **CRUMBLY** | 34.76 | 30.77 | 36.26 | 29.83 |
| **CRISPY** | 38.19 | 36.04 | 30.81 | 34.67 |
| **MELTING** | 39.13 | 32.01 | 28.03 | 19.76 |
| **DRY** | 42.81 | 38.70 | 32.36 | 40.37 |
| **LIGHT** | 44.36 | 40.80 | 35.36 | 22.93 |

**Table 5b**

| **Results of the analysis of variance:** | |
|---|---|
| | **Significant differences ( p < 5%):** |
| **THICK** | Invented product, Chips < Crackers, Biscuits |
| **STICKY** | Invented product, Chips < Crackers, Biscuits |
| **SMOOTH** | Chips, Crackers < Invented product, Biscuits |
| **CRUMBLY** | Biscuits, Chips < Invented product, Crackers |
| **CRISPY** | Crackers < Others |
| **MELTING** | Biscuit < Cracker, Chips < Invented product |
| **DRY** | Crackers < Chips < Invented product |
| **LIGHT** | Biscuit < Crackers < Chips < Invented product |

In synthesis, and to conclude on the characteristics of the final product, the biscuit according to the invention is:
- very smooth (as smooth as the non-perforated areas of a sheeted biscuit);
- very crumbly (as crumbly as a cracker);
- very thin (as thin as or thinner than a chip);
- extra melting (more melting than any of the three studied food forms studied);
- extremely light (lighter than any of the three studied food forms studied).

Those cumulative process and product characteristics make this product unique and very pleasant. Its uniqueness - and especially the sensation of lightness - can be further improved whilst resorting to the option of having a curved biscuit, which increases the external projected dimensions of the product, thus giving a sensation of larger product without increasing its real weight.

## Claims

1. A process for making a thin biscuit having a smooth surface, comprising:
- making a dough by mixing the ingredients at a temperature between 40 and 70°C to obtain a sheetable cohesive dough , said dough having the following composition in weight:
0-56% of wheat flour
4-62% of native starch
1-26% of pre-gelatinised starch
wherein for one unit of weight of native starch NS, pre-gelatinised starch PS, and wheat flour WF, *i.e.* with NS+PS+WF = 1:
WF ≤ 0.8, PS ≤ 0.37 and 0.7 ≤ NS/PS ≤ 9
and also comprising:
5-18% of water, and preferably not higher than 16%
2-12% of fat, and preferably not higher than 10%
0-28% of sugar, with 0-8% of glucose syrup
0-6% of whey powder
0.1%-1.5% of emulsifier
0%-0.5% of salt
0-2% of other ingredients namely, flavour, colouring etc..., but devoid of a leavening agent;
- sheeting the dough to a thickness between 0.2 and 1 mm, typically between 0.4 and 0.8 mm and preferably between 0.5 and 0.6 mm;
- cutting the sheeted dough into dough pieces, preferably individual dough pieces;
- baking the dough pieces on a perforated support to obtain a thin biscuit that is devoid of blisters.

2. A process as in claim 1 wherein NS/PS < 8.

3. A process as in claim 1 or 2, wherein NS ≤ 0.8, and more particularly NS ≤ 0.72.

4. A process as any one of the preceding claims, wherein NS/PS ≥ 0.9 and PS ≤ 0.32.

5. A process as any one of the preceding claims, wherein WF ≤ 0.6, and more particularly WF ≤ 0.42.

6. A process as in claim 5, wherein 1.7 ≤ NS/PS ≤ 7, NS ≤ 0.69, PS ≤ 0.27 and WF ≥ 0.18.

7. A process as in any one of the preceding claims, wherein the pre-gelatinised starch comprises at least 1% of physically modified starch.

8. A process as in claim 1 wherein the native starch is between 20 and 44%, the pre-gelatinised starch is between 4 and 17%, the wheat flour is between 10 and 27% and the water between 6 and 11%.

9. A process as in claim 3 wherein the sugar is between 12 and 24%.

10. A process as in claim 7, wherein said pre-gelatinised modified starch is maize waxy starch.

11. A process as in any one of the preceding claims, wherein said pre-gelatinised starch is at least partly non modified starch from potato, wheat, maize or tapioca.

12. A process as in any one of the preceding claims, wherein the mixing comprises:
- pre-mixing the liquid ingredients including the fat in a molten state to form an emulsion between 40 and 90°C, more particularly between 45 and 80°C, and preferably between 55 and 65°C,
- mixing the ingredients in a mixer for at least 1 minute.

13. A process as in any one of the preceding claims, wherein the perforated support comprises holes or slits.

14. A process as in any one of the preceding claims, wherein a perforated support is a convex mould for receiving at least one dough piece.

15. A process as in claim 14 wherein convex moulds are mounted on a conveyor moving in a first axis, and wherein a longitudinal axis of the convex moulds is perpendicular to the first axis.

16. A process as in any one of preceding claims, comprising a further step of de-moulding the baked biscuits by blowing air from below the perforated support and/or placing a depression conveyor above the baked biscuits.

17. A process as in any one of preceding claims, further comprising:
- spraying in at least one step, a layer of chocolate.

18. Thin biscuit having a smooth surface, being manufactured by a process according to any one of claims 1 to 16, **characterized in that** is has, before being possibly sprayed with chocolate:
- a density between 0.55 and 0.7 g/cm³, and more particularly between 0.6 and 0.65 g/ cm³
- a thickness between 0.9 and 2.5 mm, and more particularly between 1 and 1.4 mm
- a surface rugosity between 0.05 and 0.25 mm, and more particularly between 0.1 and 0.2 mm
- a moisture content between 0.5 and 2%, and more particularly between 0.8 and 1.5%.

19. Thin biscuit as in claim 18, wherein the Young elastic modulus of said biscuit, before being possibly sprayed with chocolate, is between 10⁸ and 10⁹ Pa, and more particularly between 1.5 10⁸ and 6 10⁸ Pa.

## Patentansprüche

1. Verfahren zur Herstellung eines dünnen Kekses, der eine glatte Oberfläche hat, umfassend:
- Herstellen eines Teiges durch Mischen der Ingredienzien bei einer Temperatur zwischen 40 und 70°C, um einen dünn ausrollbaren kohäsiven Teig zu erhalten, wobei der Teig die folgende Zusammensetzung als Gewicht hat:
0-56% Weizenmehl,
4-62% native Stärke,
1-26% Quellstärke,
wobei für eine Gewichtseinheit an nativer Stärke NS, Quellstärke PS und Weizenmehl WF, d.h. bei NS+PS+WF = 1:
WF ≤ 0,8, PS ≤ 0,37 und 0,7 ≤ NS/PS ≤ 9;
und auch umfassend:
5-18% Wasser und vorzugsweise nicht mehr als 16%,
2-12% Fett und vorzugsweise nicht mehr als 10%,
0-28% Zucker mit 0-8% Glucosesirup,
0-6% Molkepulver,
0,1%-1,5% Emulgator,
0%-0,5% Salz,
0-2% andere Ingredienzien, nämlich Aromamittel, Färbemittel usw., aber frei von Backtriebmittel;
- Ausrollen des Teiges zu einer Dicke von zwischen 0,2 und 1 mm, typischerweise zwischen 0,4 und 0,8 mm und vorzugsweise zwischen 0,5 und 0,6 mm;
- Schneiden des ausgerollten Teiges in Teigstücke, vorzugsweise einzelne Teigstücke;
- Backen der Teigstücke auf einem perforierten Träger unter Erhalt eines dünnen Kekses, der frei von Blasen ist.

2. Verfahren gemäß Anspruch 1, wobei NS/PS ≤ 8.

3. Verfahren gemäß Anspruch 1 oder 2, wobei NS ≤ 0,8 und insbesondere NS ≤ 0,72.

4. Verfahren gemäß einem der vorangehenden Ansprüche, wobei NS/PS ≥ 0,9 und PS ≤ 0,32.

5. Verfahren gemäß einem der vorangehenden Ansprüche, wobei WF ≤ 0,6 und insbesondere WF ≤ 0,42.

6. Verfahren gemäß Anspruch 5, wobei 1,7 ≤ NS/PS ≤ 7, NS ≤ 0,69, PS ≤ 0,27 und WF ≥ 0,18.

7. Verfahren gemäß einem der vorangehenden Ansprüche, wobei die Quellstärke wenigstens 1% physikalisch modifizierte Stärke umfasst.

8. Verfahren gemäß Anspruch 1, wobei die native Stärke zwischen 20 und 44% ist, die Quellstärke zwischen 4 und 17% ist, das Weizenmehl zwischen 10 und 27% ist und Wasser zwischen 6 und 11% ist.

9. Verfahren gemäß Anspruch 3, wobei der Zucker zwischen 12 und 24% ist.

10. Verfahren gemäß Anspruch 7, wobei die modifizierte Quellstärke Maiswachsstärke ist.

11. Verfahren gemäß einem der vorangehenden Ansprüche, wobei die Quellstärke wenigstens teilweise nichtmodifizierte Stärke aus Kartoffel, Weizen, Mais oder Tapioka ist.

12. Verfahren gemäß einem der vorangehenden Ansprüche, wobei das Mischen umfasst:
- Vormischen der flüssigen Ingredienzien, einschließlich des Fettes in geschmolzenem Zustand unter Bildung einer Emulsion zwischen 40 und 90°C, insbesondere zwischen 45 und 80°C und vorzugsweise zwischen 55 und 65°C,
- Mischen der Ingredienzien in einem Mischer für wenigstens 1 Minute.

13. Verfahren gemäß einem der vorangehenden Ansprüche, wobei der perforierte Träger Löcher oder Schlitze umfasst.

14. Verfahren gemäß einem der vorangehenden Ansprüche, wobei ein perforierter Träger eine konvexe Form zum Aufnehmen wenigstens eines Teigstückes ist.

15. Verfahren gemäß Anspruch 14, wobei konvexe Formen an einer Förderanlage montiert sind, die sich in einer ersten Achse bewegt, und wobei eine Längsachse der konvexen Formen senkrecht zu der ersten Achse ist.

16. Verfahren gemäß einem der vorangehenden Ansprüche, das einen weiteren Schritt des Entfernens der gebackenen Kekse aus der Form durch Blasen von Luft von unterhalb des perforierten Trägers und/oder Platzieren einer Unterdruckförderanlage über den gebackenen Keksen umfasst.

17. Verfahren gemäß einem der vorangehenden Ansprüche, das außerdem
- Aufsprühen einer Schokoladenschicht in wenigstens einem Schritt umfasst.

18. Dünner Keks, der eine glatte Oberfläche hat, der durch ein Verfahren gemäß einem der Ansprüche 1 bis 16 hergestellt wurde, **dadurch gekennzeichnet, dass** er, bevor er möglicherweise mit Schokolade besprüht wird, hat:
- eine Dichte zwischen 0,55 und 0,7 g/cm³ und insbesondere zwischen 0,6 und 0,65 g/cm³;
- eine Dicke zwischen 0,9 und 2,5 mm und insbesondere zwischen 1 und 1,4 mm;
- eine Oberflächenrauheit von zwischen 0,05 und 0,25 mm und insbesondere zwischen 0,1 und 0,2 mm,
- einen Feuchtigkeitsgehalt von zwischen 0,5 und 2% und insbesondere zwischen 0,8 und 1,5%.

19. Dünner Keks, wie er in Anspruch 18 beansprucht ist, wobei der Young-Elastizitätsmodul des Kekses, bevor er möglicherweise mit Schokolade besprüht wird, zwischen 10⁸ und 10⁹ Pa und insbesondere zwischen 1,5·10⁸ und 6·10⁸ Pa liegt.

## Revendications

1. Procédé de production d'un biscuit mince ayant une surface lisse, comprenant :
- la production d'une pâte en mélangeant les ingrédients à une température entre 40 et 70° C pour obtenir une pâte cohésive pouvant être étalée, ladite pâte ayant la composition suivante en poids :
0 à 56 % de farine de blé
4 à 62 % d'amidon natif
1 à 26 % d'amidon prégélatinisé
dans lequel pour une unité en poids d'amidon natif NS, d'amidon prégélatinisé PS et de farine de blé WF, c'est-à-dire NS + PS + WF = 1 ;
WF ≤ 0,8, PS ≤ 0,37 et 0,7 ≤ NS/PS ≤ 9
et comprenant également :
5 à 18 % d'eau, et de préférence moins de 16 %
2 à 12 % de matières grasses, et de préférence, moins de 10 %
0 à 28 % de sucre, comprenant 0 à 8 % de sirop de glucose
0 à 6 % de poudre de lactosérum
0,1 % à 1,5 % d'émulsifiant
0 % à 0,5 % de sel
0 à 2 % d'autres ingrédients, à savoir, un arôme, un colorant, etc., mais pas d'agent levant ;
- l'abaissement de la pâte à une épaisseur entre 0,2 et 1 mm, généralement entre 0,4 et 0,8 mm et de préférence entre 0,5 et 0,6 mm ;
- la découpe de la pâte abaissée en morceaux de pâte, de préférence, des morceaux de pâte individuels ;
- la cuisson des morceaux de pâte sur un support perforé pour obtenir un biscuit mince qui est dépourvu de boursouflures.

2. Procédé selon la revendication 1, dans lequel NS/PS ≤ 8.

3. Procédé selon la revendication 1 ou 2, dans lequel NS ≤ 0,8 et plus particulièrement, NS ≤ 0,72.

4. Procédé selon l'une quelconque des revendications précédentes, dans lequel NS/PS ≥ 0,9 et PS ≤ 0,32.

5. Procédé selon l'une quelconque des revendications précédentes, dans lequel WF ≤ 0,6 et plus particulièrement, WF ≤ 0,42.

6. Procédé selon la revendication 5, dans lequel 1,7 ≤ NS/PS ≤ 7, NS ≤ 0,69, PS ≤ 0,27 et WF ≥ 0,18.

7. Procédé selon l'une quelconque des revendications précédentes, dans lequel l'amidon prégélatinisé comprend au moins 1 % d'amidon modifié physiquement.

8. Procédé selon la revendication 1, dans lequel l'amidon natif se situe entre 20 et 44 %, l'amidon prégélatinisé se situant entre 4 et 17 %, la farine de blé se situant entre 10 et 27 % et l'eau entre 6 et 11 %.

9. Procédé selon la revendication 3, dans lequel le sucre se situe entre 12 et 24 %.

10. Procédé selon la revendication 7, dans lequel ledit amidon prégélatinisé modifié est l'amidon de maïs cireux.

11. Procédé selon l'une quelconque des revendications précédentes, dans lequel ledit amidon prégélatinisé est au moins partiellement de la fécule de pomme de terre, de l'amidon de blé, de maïs ou de la fécule de manioc non modifié(e).

12. Procédé selon l'une quelconque des revendications précédentes, dans lequel le mélange comprend :
- le prémélange des ingrédients liquides comprenant la matière grasse à l'état fondu pour former une émulsion entre 40 et 90° C, plus particulièrement entre 45 et 80° C et de préférence, entre 55 et 65° C,
- le mélange des ingrédients dans un mélangeur pendant au moins 1 minute.

13. Procédé selon l'une quelconque des revendications précédentes, dans lequel le support perforé comprend des trous ou des fentes.

14. Procédé selon l'une quelconque des revendications précédentes, dans lequel un support perforé est un moule convexe destiné à recevoir au moins un morceau de pâte.

15. Procédé selon la revendication 14, dans lequel les moules convexes sont montés sur une courroie de transport se déplaçant dans un premier axe, et dans lequel un axe longitudinal des moules convexes est perpendiculaire au premier axe.

16. Procédé selon l'une quelconque des revendications précédentes, comprenant une autre étape de démoulage des biscuits cuits par insufflation d'air par le dessous du support perforé et/ou placement d'une courroie de transport à dépression au-dessus des biscuits cuits.

17. Procédé selon l'une quelconque des revendications précédentes, comprenant en outre :
- la pulvérisation dans au moins une étape, d'une couche de chocolat.

18. Biscuit mince ayant une surface lisse, qui est fabriqué par un procédé selon l'une quelconque des revendications 1 à 16, **caractérisé en ce qu'**il présente, avant de recevoir éventuellement une pulvérisation de chocolate :
- une densité entre 0,55 et 0,7 g/cm³ et plus particulièrement, entre 0,6 et 0,65 g/cm³
- une épaisseur entre 0,9 et 2,5 mm, et plus particulièrement entre 1 et 1,4 mm
- une rugosité de surface entre 0,05 et 0,25 mm, et plus particulièrement, entre 0,1 et 0,2 mm
- une teneur en humidité entre 0,5 et 2 %, et plus particulièrement entre 0,8 et 1,5 %.

19. Biscuit mince selon la revendication 18, dans lequel le module d'élasticité de Young dudit biscuit, avant de recevoir éventuellement une pulvérisation de chocolat, se situe entre 10⁸ et 10⁹ Pa et plus particulièrement, entre 1,5 10⁸ et 6 10⁸ Pa.
